# EUROPÄISCHE PATENTSCHRIFT

(11) **EP 2 526 599 B1**
(45) Veröffentlichungstag und Bekanntmachung des Hinweises auf die Patenterteilung: **31.05.2017**
(21) Anmeldenummer: 11701486.0
(22) Anmeldetag: 18.01.2011
(51) Int. Cl.: H02G 3/04, F16G 13/16, H02G 11/00

(54) **LEITUNGSFÜHRUNGSEINRICHTUNG UND GLEITKÖRPER FÜR LEITUNGSFÜHRUNGSEINRICHTUNG**
CABLE ROUTING DEVICE AND SLIDING BODY FOR A CABLE ROUTING DEVICE
DISPOSITIF DE GUIDAGE DE LIGNE ET CORPS DE GLISSEMENT POUR DISPOSITIF DE GUIDAGE DE LIGNE

(30) Priorität: 18.01.2010 DE 202010001084 U
(43) Veröffentlichungstag der Anmeldung: 28.11.2012
(73) Patentinhaber: Igus GmbH, 51147 Köln (DE)
(72) Erfinder: THEIß, Georg, 50678 Köln (DE)
(74) Vertreter: Lippert Stachow Patentanwälte Rechtsanwälte
(86) Internationale Anmeldenummer: PCT/EP2011/050595
(87) Internationale Veröffentlichungsnummer: WO 2011/086198

(56) Entgegenhaltungen:
- EP-A1- 0 277 389
- WO-A1-93/03526
- WO-A2-01/37375
- DE-A1- 19 916 791

## Beschreibung

Die Erfindung betrifft eine Leitungsführungseinrichtung zur Aufnahme und Führung von Energieleitungen oder Versorgungsleitungen zwischen zwei relativ zueinander beweglichen Anschlusspunkten in einer Kreisbewegung, wobei die Leitungsführungseinrichtung einen kreisbogenförmigen Körper und einen Führungsraum für die Energieleitungen aufweist, wobei der Körper als Grundform ein flaches kreisringförmiges Band mit einer oder mehreren in einer Bereitstellungslage um eine Mittelachse schraubenartig gewundenen Lagen aufweist, das Band umfängliche Schmalseiten und diese verbindende gegenüberliegende größere Seiten, eine erste Seite und eine zweite Seite, aufweist, die erste Seite zumindest über einen radialen Teilbereich als zumindest im Wesentlichen durchgehende Gleitfläche ausgebildet ist und an der zweiten Seite der Führungsraum angeordnet ist sowie der kreisbogenförmige Körper in Einsatzlage ein in einer Drehrichtung gewundenes erstes Trum, ein gegensinnig zu dem ersten Trum gewundenes zweites Trum und einen die beiden Trume verbindenden Umlenkbogen aufweist. Die Erfindung betrifft ferner einen Gleitkörper zur Stabilisierung des Umlenkbogens der Leitungsführungseinrichtung, wobei der Gleitkörper eine an den Umlenkbogen angepasste Form mit einer durchgehenden Lauffläche aufweist, mittels derer der Gleitkörper in Einbaulage in der Leitungsführungseinrichtung innenseitig des Umlenkbodens zumindest partiell an der Gleitfläche des Umlenkbogens gleitverschieblich anliegt.

In der Bereitstellungslage ist das Band durchgängig in Lagen gewunden, wobei eine Lage mit einer seiner größeren Seite der anderen Seite der benachbarten Lage gegenüberliegt. In der Einsatzlage ist das Band unter Ausbildung von Umlenkbogen und Trumen an einer Stelle so umgeschlagen, dass die gleiche größere Seiten der Trume im Bereich des Umlenkbogens einander gegenüberliegend angeordnet sind.

Bekannte Leitungsführungseinrichtungen weisen ein relativ großes Einbauvolumen auf. Zudem sind sie in ihrer Kreisbewegung auf einen relativ kleinen Drehwinkel begrenzt.

Die WO93/03526 beschreibt eine gattungsgemäße Leitungsführungseinrichtung mit einem kreisringförmigen Band, das in einem Bereich zwischen zwei kreisartigen Strukturen gehalten unter Ausbildung von Trumen und Umlenkbogen über einen Drehwinkel verfahrbar ist. Hierbei sind die gleichen größeren Seiten der Trume im Bereich des Umlenkbogens parallel zueinander verlaufend einander gegenüberliegend angeordnet. Hierdurch wird bereits eine gute kreisförmige Führung des Bandes zwischen den Strukturen über einen größeren Drehwinkelbereich erzielt.

Die WO 01/37375 A2 offenbart eine baulich aufwendig gestaltete kreisförmige Leitungsführungseinrichtung, die als Gleitkörper eine Vielzahl von Stützrollen aufweist, über die das Band im Bereich des Umlenkbogens geführt ist. Die Trume sind auf an einem inneren zylindrischen Gehäuse vorkragenden umlaufenden Vorsprüngen abgelegt geführt.

In der EP 0277 389 A1 wird eine übliche kettenförmig Leitungsführungseinrichtung beschrieben, wobei die Kette bezüglich ihrer Längsachse um einen bestimmten Winkelbereich verdrehbar ist.

Die DE 199 16 781 A1 geht auf eine kreisförmige Energieführungskette als Leitungsführungseinrichtung ein, bei der die Trume ebenfalls parallel zueinander verlaufend angeordnet sind und sich benachbarte Kettenglieder unter Definierung des Radius des Umlenkbogens in demselben über Anschläge aneinander abstützen.

Der Erfindung liegt die Aufgabe zugrunde, eine Leitungsführungseinrichtung der eingangs genannten Art mit einer weiter verbesserten Führung des Bandes zwischen den Anschlusspunkten bereitzustellen.

Die gestellte Aufgabe wird erfindungsgemäß durch die Merkmale des Anspruches 1 gelöst. Vorteilhafte Weiterbildungen werden in den anhängenden Unteransprüchen beschrieben. Die gestellte Aufgabe wird insbesondere dadurch gelöst, dass das Band in der Bereitstellungslage zu einer durchgehenden Wendel gebogen ist, in der die Lagen über ihre größeren Seiten aneinander anliegen, und der kreisbogenförmige Körper in der Einsatzlage über die Anschlusspunkte längs der Mittelachse gleich einer Zugfeder vorgespannt ist.

Das flache Band kann in Form einer zylindrische Spirale oder Wendel gewunden sein. Somit kann eine mittels einer Schmalseite und einer größeren Seite gebildete umfängliche Kantenlinie als eine Kurve beschrieben werden, die sich mit einer steten Steigung um den Mantel des Zylinders windet. Die Wendel kann rechts- oder linksdrehend ausgebildet sein. Die Wendel kann auch als Doppelwendel ausgebildet sein. In der Bereitstellungslage ist das Band zu einer durchgehenden Wendel gewunden, in der die Lagen über ihre größeren Seiten in axialer Richtung aneinander anliegen. Somit ist diese Bereitstellungslage mit der sehr kompakten Form des Bandes sehr gut für Lagerung, Transport und Bereitstellung vor Ort vor der Montage der Leitungsführungseinrichtung geeignet. Infolge der Wendelform können die Flächennormalen der Schmalseiten durch die Kreisbewegung zumindest im Wesentlichen radial nach außen bzw. radial nach innen weisen. Desgleichen können die Flächennormalen der ersten und zweiten Seite im Wesentlichen in axialer Richtung weisen. Aus der Form des in Lagen gewunden Bandes ergibt sich, dass in der Bereitstellungslage eine Lage mit einer seiner größeren Seite der anderen Seite der benachbarten Lage gegenüberliegt. Ferner können die Lagen in der Bereitstellungslage über ihre größeren Seitenflächen aneinander anliegen.

Das Band ist somit als Träger für den Führungsraum und die dort geführten Energieleitungen konzipiert. Das Band kann streifenartig und in Umfangsrichtung gebogen ausgeführt sein. Somit kann das Band mit seiner radial nach innen weisenden Schmalseite einen vergleichsweise sehr geringen Krümmungsradius aufweisen, d. h. entsprechend gering beabstandet zur Mittelache angeordnet sein. Dadurch kann die radiale Baugröße der Leitungsführungseinrichtung entsprechend gering sein. Infolge der Anordnung des Bandes in einer oder mehreren Lagen kann eine vergleichsweise geringe Bauhöhe erzielt werden.

Ferner kann der Führungsraum zumindest in etwa über die gesamte radiale Breite des Bandes angeordnet sein und daher stabil gehalten werden. Dies wiederum ermöglicht eine verringerte Bandstärke in axialer Richtung, wodurch das Band bezüglich radialer Achsen relativ flexibel ausgelegt werden kann.

Zum Einbau des kreisbogenförmigen Körpers in die Leitungsführungseinrichtung wird dieser Körper mit dem Band aus der Bereitstellungslage in eine Einsatzlage überführt. Zum Überführen des kreisbogenförmigen Körpers aus der Bereitstellungslage in die Einsatzlage kann ein Endbereich des Körpers mit dem Anschlusspunkt in umfänglicher Richtung umgeschlagen bzw. über sich selbst zurückgeführt und somit in gegensinniger Windungsrichtung angeordnet werden. Dadurch können der Umlenkbogen und die beiden Trume ausgebildet werden, wobei das durch den umgeschlagenen Endbereich gebildete Trum gegensinnig zum Drehsinn des kreisbogenförmigen Körpers in der Bereitstellungslage gewunden ist

In der Einsatzlage weist der kreisbogenförmigen Körper somit ein in einer Drehrichtung gewundenes erstes Trum, ein gegensinnig zu dem ersten Trum gewundenes zweites Trum und einen die beiden Trume verbindenden Umlenkbogen auf. Aufgrund der Umlenkung liegen Bereiche der Gleitfläche an den an den Umlenkbogen anschließenden Abschnitten der beiden Trume zueinander gewandt gegenüber.

Damit können gerade in den Abschnitten, in denen eine Relativbewegung der Trume stattfindet, die Gleitflächen einander zugewandt sein, so dass hier bei der Kreisbewegung eine Gleitbewegung der Trume aufeinander ermöglicht wird. Hingegen können sich bei der Kreisbewegung des Köpers die weiter von dem Umlenkbogen entfernten Abschnitte der Trume aufeinander ablegen und höchstens eine geringe Relativbewegung zueinander ausführen.

Durch die Anordnung des Bandes in einer oder mehreren Lagen kann die Kreisbewegung zwischen zwei relativ zueinander beweglichen Anschlusspunkten bezüglich der Mittelachse über einen Mittelpunktswinkel von mehreren tausend Grad und wesentlich mehr erfolgen. Eine Begrenzung eines erreichbaren Mittelpunktswinkel ist im Prinzip nur von den Festigkeiten des Bandes, insbesondere von seiner Zugfestigkeit, abhängig.

Die Gleitfläche kann eine als Gleitkufe dienende Verdickung, Auswölbung, Rippe oder Erhöhung aufweisen, die vorteilhaft in einem bestimmten Radius und in umfänglicher Richtung verlaufend angeordnet ist. Hierdurch kann die beim Aneinandergleiten der Gleitflächen auftretende Reibung herabgesetzt werden. Vorzugsweise weist die Verdickung, Auswölbung oder Erhöhung Gleitreibung mindernde, stark gerundete Außenflächen auf. Die Gleitfläche kann mittels einer Aneinanderreihung einzelner Erhebungen gebildet werden, die vorteilhaft auf einem bestimmten Radius angeordnet sind.

Das flache Band kann flexibel ausgebildet sein. Es kann aus flexiblem Kunststoff gefertigt sein. Es kann zumindest um radiale Achsen flexibel und/oder schwenkbar ausgebildet sein. Das Band kann vorzugsweise aus Vollmaterial, insbesondere ohne Kammern ausgebildet sein. Vorzugsweise weist das Band keine Kammern zum Führen der Energieleitungen auf. Das Band kann einstückig oder modulartig aus einzelnen, vorzugsweise einstückigen, Bandabschnitten zusammengesetzt sein.

Vorzugsweise können an der zweiten Seite Mittel zur Aufnahme und Führung der Energieleitungen angeordnet sein. Diese können zur Begrenzung des Führungsraumes dienen. Hierbei kann die zweite Seite des Bandes eine Innenwand des Führungsraumes bilden. Der Führungsraum kann zwei oder mehrere Führungskanäle zur getrennten Führung von Energieleitungen aufweisen.

Die Mittel können in umfänglicher Richtung voneinander beabstandet sein. Die Mittel können beispielsweise einen bügel-oder bogenartigen Aufbau aufweisen. Die Mittel können als bügel- oder bogenartige Halteelemente ausgebildet sein. Diese können in umfänglicher Richtung beabstandet zueinander auf einem Radius angeordnet sein und in radialer Richtung einen als Führungsraum vorgesehenen Bereich überspannen.

Infolge der angeordneten Mittel kann die Flexibilität des Bandes an der Stelle mit den Mitteln vermindert sein, so dass eine Biegung des Bandes eher oder ausschließlich in den umfänglichen Zwischenbereichen zwischen den Mitteln erfolgen kann. Hierbei kann in den Zwischenbereichen auch eine Verdrehung des Bandes bezüglich seiner Längsachse erfolgen. Ferner können die Enden statisch zueinander verdreht gehalten werden.

Der Fall der ausschließlichen Biegung in den Zwischenbereichen kann bei sich umfänglich gering erstreckenden Zwischenräumen bereits als eine Verschwenkung angesehen werden. Sind die Mittel umfänglich gering beabstandet, was bevorzugt ist, so können die Mittel bei einer Biegung aus einer gestreckten Lage des Bandes in eine der Krümmung des Umlenkbogens entgegen gesetzte Richtung als Anschläge zur Begrenzung dieser Biegung dienen. Hierzu können seitlich an den Mitteln und sich umfänglich von diesen weg erstreckend Vorsprünge oder Puffer als definierte Anschläge vorgesehen sein. Vorzugsweise sind die Anschläge so dimensioniert, dass sie, aneinander anschlagend, eine Biegung des Bandes aus der gestreckten Lage des Bandes um radiale Biegeachsen entgegen der Krümmung der Umlenkbogen zumindest lediglich im geringen Umfang zulassen oder zumindest nahezu vollständig unterbinden. Damit können die Mittel in der gestreckten oder nahezu gestreckten Lage des Bandes über die Anschläge unter Spannung aneinander anliegen, wodurch die Körperstabilität sowie die Laufruhe des Bandes mit den angeordneten Mitteln gesteigert werden kann. Bei einer Biegung des Bandes zum Umlenkbogen können die angeordneten Mittel bezüglich der Anschläge in umfänglicher Richtung weiter beabstandet werden, so dass eine ordnungsgemäße Biegung oder Verschwenkung zur Ausbildung des Umlenkbogen unaufwendig und Material schonend erfolgen kann.

Die Halteelemente können innere Verstärkungsstrukturen, beispielsweise in Form von zusätzlichen Innenwänden oder - Rippen, aufweisen. Hierdurch kann insbesondere die Verwindungssteifigkeit der Halteelemente und/oder der Bandes bzw. des Körpers im Bereich des jeweiligen Halteelementes erhöht werden.

Die Halteelemente können jeweils als U-förmiger Bügel mit Schenkeln und diese verbindendem Quersteg ausgebildet sein, wobei die beide Schenkel jeweils mit ihrem freien Ende an der zweiten Seite des Bandes festgelegt sind. Der Bügel kann eine Basisplatte aufweisen, an der die beiden Schenkel jeweils mit ihrem freien Ende festgelegt sind und über die der Bügel an der zweiten Seite festlegbar ist.

Vorzugsweise sind die Halteelemente so ausgebildet und/oder so an dem Band angeordnet, dass an einer Stelle über ihren radialen Verlauf zumindest ein Spalt zum Einlegen der Energieleitungen vorgesehen ist. Das Halteelement kann zum Einlegen der Energieleitung auch ohne Ausbildung eines Spalts durchbrochen sein. Der Spalt ist vorteilhaft flexibel aufweitbar. Der Spalt kann beispielsweise zwischen einem freien Ende des bügel- oder bogenartigen Halteelementes und der zweiten Seite des Bandes bzw. der Basisplatte vorgesehen sein.

Die Halteelemente können einstückig mit der zweiten Seite des Bandes verbunden sein. Hierbei kann die einstückige Verbindung mit der zweiten Seite über das freie Ende eines der Schenkel erfolgen, während das freie Ende des anderen Schenkels über den Spalt beabstandet zu der zweiten Seite angeordnet ist.

Das Halteelement kann vorzugsweise mittels einer Schnappverbindung an der zweiten Seite festlegbar sein. Die Schnappverbindung kann beispielsweise nach dem Druckknopfprinzip über Noppenverschlüsse erfolgen. Es kann auch eine Schnapphakenverbindung vorgesehen sein. Hierzu kann an den freien Enden der Schenkel jeweils ein Rasthaken vorgesehen sein. Die Rasthaken können in entgegengesetzter Richtung an der Basis verrasten.

Das Band kann aus einer Vielzahl von in umfänglicher Richtung aneinander angrenzenden, kreissektorförmigen Elementen zusammengesetzt sein. Diese Elemente können in ihren in Umfangsrichtung angrenzenden Bereichen flexibel und/oder schwenkbar miteinander verbunden sein. Die umfängliche Erstreckung der kreissektorförmigen Elemente kann bezüglich der Mittelachse Mittelpunktswinkelgrade von 1° bis 45°, vorzugsweise 5° bis 35° oder 10° bis 25° betragen.

Die Elemente können in ihren angrenzenden Bereichen ein Schwenkgelenk aufweisen. Hierzu können die Elemente in ihren angrenzenden Bereichen eine Querschnittsverringerung aufweisen, die so groß sein kann, dass sie Foliengelenke ausbilden. Diese Foliengelenke können sich entsprechend in radiale Richtung erstrecken. Vorzugsweise erstrecken sich die Foliengelenke über die gesamte radiale Breite des Bandes. Die Schwenkgelenke bzw. Foliengelenke können jeweils so ausgebildet sein, dass bei Auslenkung zweier benachbarter Elemente mittels eines sie verbindenden Schwenkgelenks bzw. Foliengelenks vorzugsweise aus einer gestreckten oder ungekrümmten Anordnung eine Rückstellkraft aufbaut wird.

Das Band oder der Körper mit dem Band kann einstückig ausgebildet sein. Das Band kann alternativ aus mehreren in umfänglicher Richtung angrenzenden, kreissektorförmigen Modulen aufgebaut sein. Die Module können in ihren in Umfangsrichtung angrenzenden Bereichen flexibel/oder verschwenkbar miteinander verbunden sein. Die Module können hierzu in ihren angrenzenden Bereichen beispielsweise über eine Steckverbindung vorzugsweise mit radialer T-Nut und angepasster Feder verbunden sein. Miteinander zu dem Band verbunden, können die Module jeweils einen kreissektorförmigen Abschnitt des kreisbogenförmigen Körpers bilden.

Vorzugsweise umfassen die Module jeweils eine Anzahl von den zuvor in den verschiedenen Ausführungsformen beschriebenen Elementen.

Es kann vorgesehen sein, dass nicht jedes der Elemente die zuvor beschriebenen Mittel zur Aufnahme der Energieleitung aufweist. Vorzugsweise sind bestimmte, vorzugsweise umfänglich gleich voneinander beabstandete Elemente mit diesen Mittel versehen. Dies kann bezüglich der Gesamtheit aller Elemente auf dem Band und/oder bezüglich der Elemente eines Moduls vorgesehen sein.

Vorzugsweise sind die Module einstückig, insbesondere als einstückige Spritzgussteile ausgebildet.

Zur Stabilisierung des Umlenkbogens kann ein eingangs beschriebener gattungsgemäßer dem Umlenkbogen angepasster Gleitkörper vorgesehen sein. In einer alternativen Lösung der eingangs gestellten Aufgabe ist die Form diese gattungsgemäßen Gleitkörpers kreisringsektorartig um eine Achse gekrümmt ausgebildet. Zudem ist die Lauffläche aus zwei axial voneinander abgewandten und in Richtung der Achse weisenden Laufflächenabschnitten für an den Umlenkbogen anschließende Abschnitten der Trume und einem an einer in Umfangsrichtung weisenden Stirnseite angeordneten, dem Umlenkbogen angepassten und die in Richtung der Achse weisenden Laufflächenabschnitte verbindenden Laufflächenabschnitt aufgebaut. Mittels dieses Gleitköpers kann der Umlenkbogen auf eine definierte kreisartige Form gehalten werden. Der Umlenkbogen kann zumindest partiell an der Gleitfläche des Umlenkbogens gleitverschieblich anliegen. Der Gleitkörper kann in Einbaulage in die Leitungsführungseinrichtung innenseitig an dem Umlenkbogen über eine vorgesehene Lauffläche gleitverschieblich an demselben angeordnet sein. Er kann kreisringsektorartig um eine Achse gekrümmt sein und eine durchgehende Lauffläche aufweisen. In Einbaulage kann diese Achse gleich der Mittelachse sein, um die in Einbaulage der kreisbogenförmigen Körper gewunden ist. Die Lauffläche kann aus zwei axial voneinander abgewandten und in Richtung der Achse weisenden Laufflächenabschnitten für an den Umlenkbogen anschließende Abschnitten der Trume und einem an einer in Umfangsrichtung weisenden Stirnseite angeordneten, dem Umlenkbogen angepassten und die in Richtung der Achse (b) weisenden Laufflächenabschnitte verbindenden Laufflächenabschnitt aufgebaut sein.

Der Gleitkörper kann gegen ein unbeabsichtigtes Herausgleiten radial nach außen aus dem Umlenkbogen gesichert sein. Vorzugsweise erstreckt sich der Gleitkörper bezüglich der Mittelachse über einen Mittelpunktswinkel, der größer als 180° und kleiner 360° ist. Hierdurch kann der Gleitkörper soweit die Mittelachse umgreifen, dass er, an dem Band anliegend, gehalten werden kann. Ferner kann hierdurch der Gleitkörper auch an den Umlenkbogen anschließenden Abschnitten der beiden Trume gleitverschieblich anliegen.

Hierdurch können die Abschnitte der beiden Trume voneinander beabstandet gehalten werden. Dies wiederum kann die Gleitreibung der Abschnitte beim Verfahren des Bandes weiter verringern. Abhängig von der Dimensionierung des Gleitkörpers, d. h. seiner axialen und umfänglichen Erstreckung, können diese Abschnitte durch den Gleitkörper soweit axial beabstandet und/oder von demselben umfänglich über einen so großen Mittelpunktswinkel getragen werden, dass diese Abschnitte mit dem Verfahren des Bandes nicht mehr zur gleitverschieblichen Anlage aneinander kommen, sondern allein an der Lauffläche des Gleitkörpers abgleiten. Die axiale Beabstandung kann so auf den kreisbogenförmigen Körper abgestimmt sein, dass die Lagen in Richtung der Mittelachse vor und hinter dem Umlenkbogen zumindest in etwa parallel zueinander und etwa senkrecht zur Mittelachse angeordnet sind. Die Laufflächenabschnitten für die an den Umlenkbogen anschließende Abschnitten der Trume können somit axial in einem Abstand zueinander angeordnet sein, der zumindest etwa gleich dem doppelten Radius des Umlenkbogens ist.

Der Gleitkörper selbst ist vorzugsweise einstückig und insbesondere aus Kunststoff gefertigt. Er weist vorzugsweise bezüglich seiner Laufflächen eine Oberfläche auf, die in der Paarung mit dem Werkstoff des Bandes eine geringe Gleitreibung aufweist. Die Lauffläche kann Teflon beschichtet sein. Es kann eine Schmierung der Laufflächen vorgesehen sein.

Mittels des Gleitkörpers kann das Band bzw. der kreisbogenförmige Körper über den kreisförmigen Verfahrweg stabilisiert werden. Bei Fehlen des Gleitkörpers können insbesondere in Bereichen, die dem Umlenkbogen radial gegenüberliegenden Ausbauchungen bezüglich der Mittelachse radial nach außen auftreten, indem das Band in diesen Bereichen über seinen umfänglichen Verlauf radial nach außen gedrückt werden kann. Durch den Gleitkörper kann diese Ausbauchung zumindest im Wesentlichen vermindert werden.

Die Leitungsführungseinrichtung kann eine Führungsvorrichtung für den kreisbogenförmigen Körper bzw. für das Band aufweisen. Hierzu kann die Führungsvorrichtung ein in der Mittelachse angeordnetes zylindrisches Führungselement aufweisen, um das der kreisbogenförmige Körper bzw. das Band in Einbaulage gewunden angeordnet ist. Vorzugsweise liegt das Band zumindest partiell mit seiner radial nach innen weisenden Schmalseiten gleitverschieblich an den Zylindermantel des zylindrischen Führungselementes an. Hierbei können an dieser Schmalseite radial nach innen zu dem Führungselement hin ragende Noppen oder Vorsprünge vorgesehen sein, über die sich der Körper an dem Mantel des zylindrischen Führungselements abstützt. Das zylindrische Führungselement ist vorzugsweise konzentrisch zur Mittelachse angeordnet. Ferner kann die Führungsvorrichtung mindestens einen Mitnehmer für einen der Anschlusspunkte aufweisen, mittels dessen dieser Anschlusspunkt relativ zu dem anderen Anschlusspunkt in der Kreisbewegung bewegbar ist. Es kann für jeden Anschlusspunkt jeweils ein Mitnehmer vorgesehen sein, um die Anschlusspunkte relativ zueinander beispielsweise gegensinnig in der Kreisbewegung zu bewegen.

Die Anschlusspunkte können in Richtung der Mittelachse vorgespannt sein. Hierdurch kann das Band in seiner um das zylindrische Führungselement gebundenen Lage stabilisiert werden. Aufgrund der vorgesehenen Flexibilität des Bandes kann der Körper gleich einer Zugfeder zumindest leicht vorgespannt sein. Hierüber können die einzelnen Lagen in Richtung der Mittelachse voneinander beabstandet angeordnet sein. Ferner können insbesondere im Bereich des Umlenkbogens die angrenzenden Abschnitte der beiden Trume zumindest weitgehend so voneinander beabstandet sein, dass die beiden Abschnitte höchstens innerhalb eines kleinen Bereiches aneinander abgleiten können. Dieser Bereich ist, kräftemechanisch bedingt, vorzugsweise bezüglich der Mittelachse radial etwa gegenüberliegend zu den Umlenkbogen angeordnet. Aufgrund der Vorspannung und der Aufweitung der Windungen durch den Umlenkbogen können die beiden Abschnitte so geneigt zueinander angeordnet sein, dass sie sich lediglich bezüglich der Mittelachse radial außen aneinander abstützend relativ zueinander abgleiten. Damit ist eine mögliche Gleitreibung des Bandes bei der Kreisbewegung der beiden Anschlusspunkte relativ zueinander auf einen minimalen Bereich begrenzt, so dass die auftretende Gleitreibung entsprechend gering ausfällt. Die Windungen der Trume können unter Vorspannung jeweils zu einer kegelartigen Grundform ausgezogen sein. Die Windungen können ineinander geschachtelt angeordnet sein. Der Durchmesser der Windungen kann zum Umlenkbogen hin zunehmen. Damit kann das Band weiter lagestabilisiert werden. Es kann der Normalenvektor des zu einem Trum zugehörigen Abschnitts der den Führungsraum aufweisenden zweiten Seite mit einer Richtungskomponente radial nach innen weisen. Abhängig von der Größe der radialen Richtungskomponente kann der Führungsraum nach außen hin abgeschirmt werden.

Der bzw. die Mitnehmer können beispielsweise von der Mittelachse wegkragende Bauelemente sein, an denen der Anschlusspunkt bzw. die Anschlusspunkte befestigbar sind. Als Mitnehmer können beispielsweise Kreisscheiben vorgesehen sein, die endseitig jeweils an dem zylindrischen Führungselement in einer Kreisbewegung angelagert sind. Die über das zylindrische Führungselement in Richtung der Mittelachse beabstandeten Kreisscheiben können zugleich zwischen sich den Raum einschließen, in dem der kreisbogenförmige Körper verfahrbar ist. Somit kann der Körper geschützt zwischen den Kreisscheiben angeordnet sein.

Die vorliegende Erfindung wird im Folgenden anhand mehrerer in einer Zeichnung dargestellter Ausführungsformen näher erläutert. In der Zeichnung zeigen:
- Fig. 1: eine perspektivische Ansicht eines Bandes einer ersten Ausführungsform einer Leitungsführungseinrichtung als Prinzipskizze,
- Fig. 2a bis 2c: jeweils eine perspektivische Seitenansicht des Bandes gemäß Figur 1 in einer Abfolge von drei Schritten,
- Fig. 3a bis 3c: jeweils eine perspektivische Seitenansicht einer zweiten Ausgangsführungsform des Bandes ähnlich wie in Figur 2 in einer Abfolge von drei Verfahrensschritten,
- Fig. 4a bis 4d: jeweils eine Ansicht einer vierten Ausführungsform des Bandes,
- Fig. 5: eine perspektivische Ansicht eines Moduls in einer Einsatzposition,
- Fig. 6a bis 6c: jeweils eine Ansicht des Moduls ähnlich Figur 5, jedoch in einer kleineren Ausführungsform,
- Fig. 7a bis 7c: jeweils eine Ansicht einer weiteren Ausführungsform des Moduls,
- Fig. 8a bis 8c: jeweils eine Ansicht des Bandes gemäß Figur 4 mit eingeschobenem Gleitkörper,
- Fig. 9a bis 9d: jeweils eine Ansicht des Gleitkörpers und
- Fig. 10a bis 10d: jeweils eine Ansicht des Bandes gemäß Figur 1 mit Führungsvorrichtung in einer Prinzipskizze.

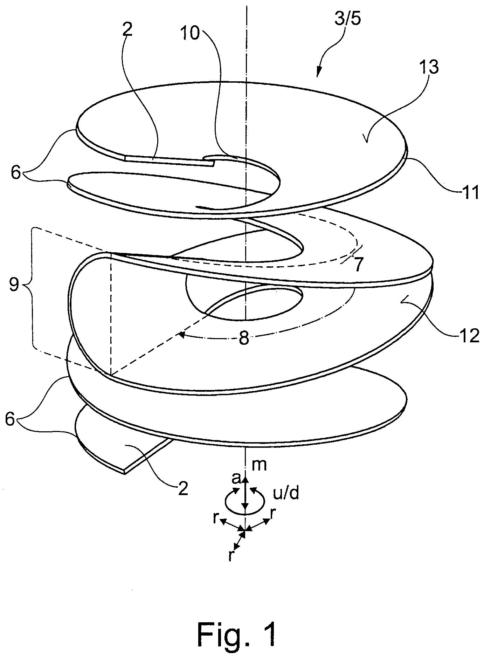

In den Figuren 1 bis 10 werden in verschiedenen Ansichten und Schnittansichten verschiedene Ausführungsformen einer Leitungsführungseinrichtung 1 bzw. Teile der Leitungsführungseinrichtung 1 zur Aufnahme und Führung von Energieleitungen E zwischen zwei relativ zueinander beweglichen Anschlusspunkten 2 in einer Kreisbewegung gezeigt. Die Leitungsführungseinrichtung 1 weist einen kreisbogenförmigen Körper 3 und einen Führungsraum 4 für die Energieleitung E auf.

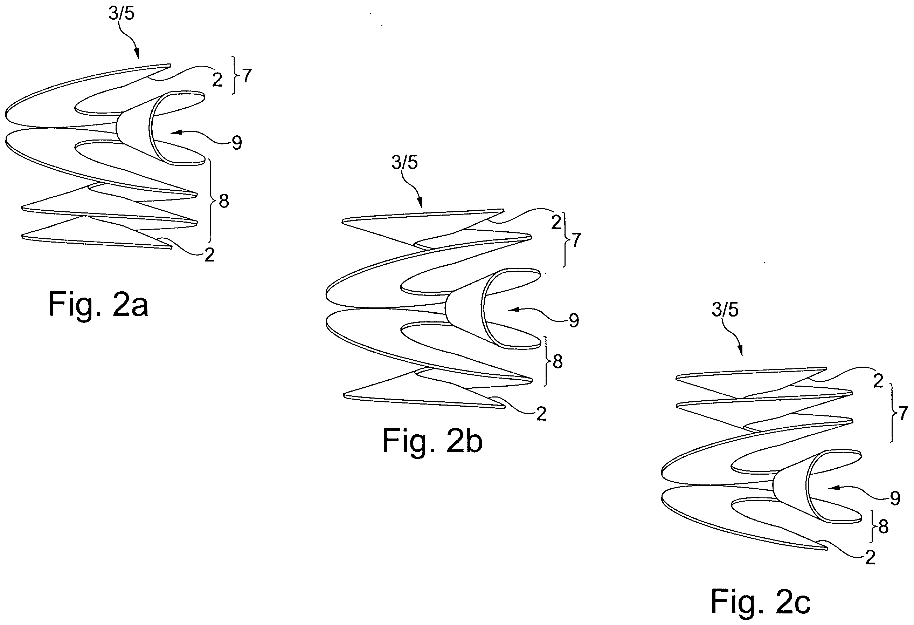

Wie beispielsweise den Figuren 1 und 2 in Form einer einfachen Prinzipskizze dargestellt, weist der Körper 3 als Grundform ein flaches kreisringförmiges Band 5 mit mehreren um eine Mittelachse m schraubenartig gewundenen Lagen 6 auf. In der hier gezeigten Einsatzlage weist der kreisbogenförmige Körper 3 ein in einer Drehrichtung d gewundenes erstes Trum 7, ein gegensinnig zu dem ersten Trum 7 gewundenes zweites Trum 8 und einen die beiden Trume 7, 8 verbindenden Umlenkbogen 9 auf. In einer in der Zeichnung nicht gezeigten Bereitstellungslage des kreisbogenförmige Körpers 3, in der der Körper 3 beispielsweise zur Montage angeliefert werden kann, ist das flache kreisringförmige Band 5 ohne Ausbildung von Umlenkbogen und Trume in mehreren Lagen wendelförmig um die Mittelachse m gewunden. Zum Überführen des Körpers 3 aus der Bereitstellungslage in die Einsatzlage wird einer der Endbereiche des Körpers 3 mit dem Anschlusspunkt 2 in umfänglicher Richtung u umgeschlagen bzw. über sich selbst zurückgeführt und unter Ausbildung eines der Trume 7, 8 in gegensinniger Windungsrichtung angeordnet.

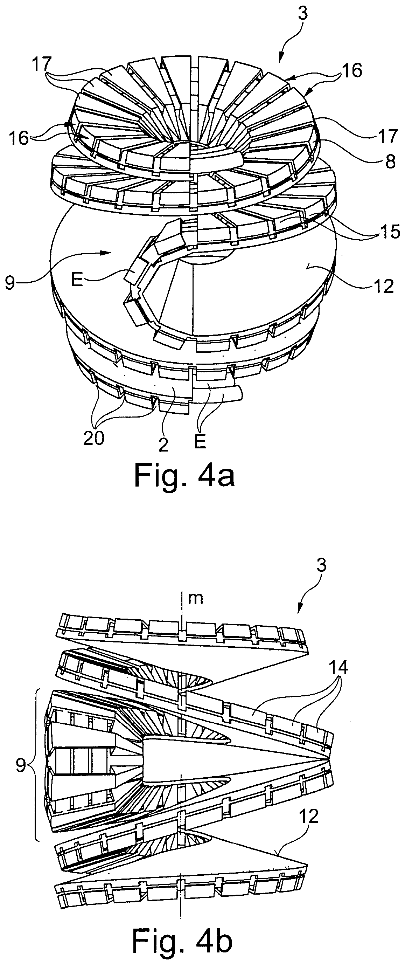

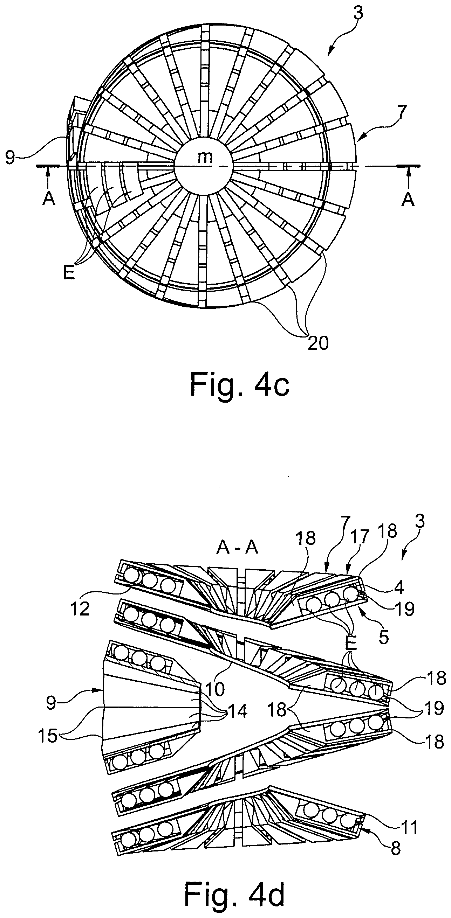

Das flache Band weist, wie beispielsweise der Figur 1 entnehmbar, umfängliche Schmalseiten 10, 11 und diese verbindende gegenüberliegende größere Seiten, eine erste Seite 12 und eine zweite Seite 13, auf. Hierbei weist eine als innere Schmalseite 10 ausgebildete Schmalseite bezüglich der Mittelachse m im Wesentlichen radial nach innen, während die andere als äußere Schmalseite 11 ausgebildete Schmalseite bezüglich der Mittelachse m im Wesentlichen radial nach außen weist. Entsprechend weisen die beiden Seiten 12, 13 bezüglich der Mittelachse m im Wesentlichen in axiale Richtungen. Während die erste Seite 12 als im Wesentlichen durchgehende Gleitfläche 14 ausgebildet ist, ist an der zweiten Seite 13 der Führungsraum 4 angeordnet, welches insbesondere den Figuren 4 bis 7 entnehmbar ist.

Bei den in den Figuren 1 bis 3 gezeigten prinzipiellen Darstellungen des Körpers 3 sind die Anschlusspunkte 2 bezüglich der Mittelachse m bereits unter Verspannung des Körpers 3 so auseinander gezogen, dass das Band 5 gleich einer Zugfeder in seiner dargestellten Form mechanisch stabiler gehalten werden kann. Die zweite Seite 13 mit dem Führungsraum 4 weist axial und radial nach innen, wodurch der Körper 3 weiter lagestabilisiert wird und der Führungsraum 4 im bestimmten Maße nach außen abgeschirmt wird. Wie deutlich insbesondere Figur 2b entnehmbar, weisen die Trume 7,8 jeweils Windungen auf, die in Einsatzlage unter Federvorspannung in Beschreibung einer kegelartige Grundform gewunden und ineinander geschachtelt sind. Hierbei vergrößern sich die Durchmesser der Windungen zum Umlenkbogen 9 hin.

Wie ferner beispielsweise den Figuren 1 bis 3 entnehmbar, ist die als Gleitfläche ausgebildete erste Seite 12 so angeordnet, dass sie im Bereich des Umlenkbogens 9 und der an den Umlenkbogen 9 anschließenden Abschnitte der beiden Trume 7, 8 zueinander gekehrt angeordnet ist. Dank der oben beschriebenen Vorspannung, auf die noch weiter unten eingegangen wird, liegen die beiden Trume 7, 8 bezüglich der Mittelachse m dem Umlenkbogen 9 in etwa radial gegenüberliegend lediglich im Bereich der äußeren Schmalseite 11 gleitverschieblich an.

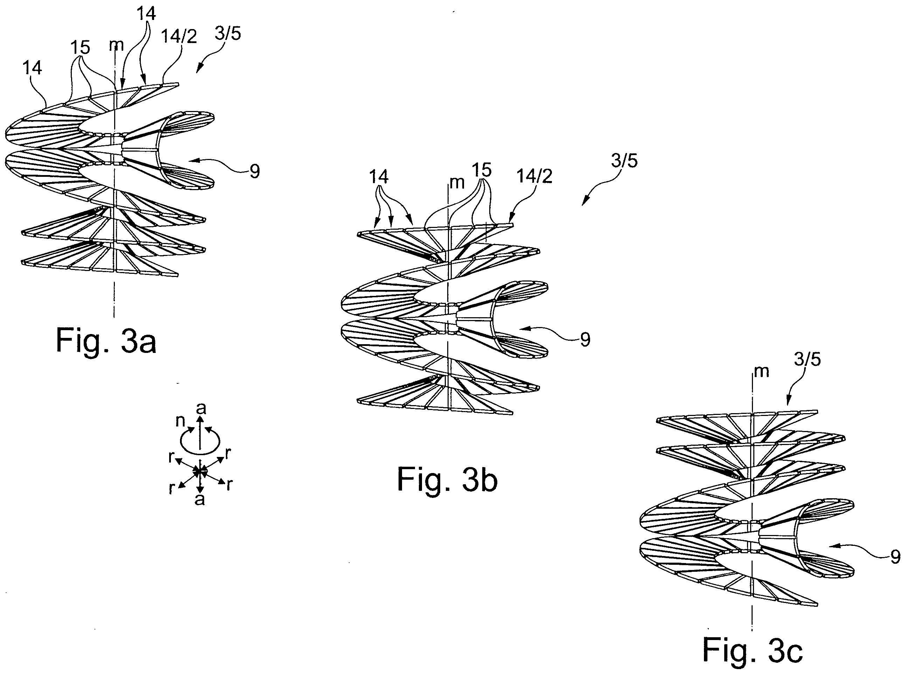

In den Figuren 2 und 3 wird in jeweils drei Schritten gezeigt, wie der Umlenkbogen 9 mit der relativen Kreisbewegung der beiden Anschlusspunkte 2 nach unten wandert, wobei zwischen den Einzeldarstellungen jeweils eine kreisförmige Relativbewegung der beiden Anschlusspunkte 2 bezüglich der Mittelachse m um einen Mittelpunktswinkel von etwa 720° erfolgt ist. Aus dieser Darstellung wird ersichtlich, dass mittels dieser hier dargestellten Konfiguration der Leitungsführungseinrichtung 1 mit dem flachen Band 5 als Körper 3 eine relative Kreisbewegung der beiden Anschlusspunkte 2 um einen Mittelpunktswinkel von etwa 8 x 360° möglich ist.

Wie ferner unmittelbar den Abbildungen 1 bis 3 ersichtlich, ist, das Band 5 flexibel oder, wie anhand weiterer Ausführungsformen noch erläutert, um radialen Achsen verschwenkbar ausgebildet. Dank der Anordnung des Körpers 3 in Form des Bandes 5 in mehreren, um die Mittelachse m gewundenen Lagen 6 ist die Bauhöhe der Leitungsführungseinrichtung 1 trotz der möglichen großen Kreisbewegung über einen sehr großen Mittelpunktswinkel von hier ca. 2800° relativ gering. Wie ebenfalls den Prinzipskizzen gemäß Figuren 1 bis 3 unmittelbar ersichtlich, ist das Band 5 entsprechend seiner kreisringförmigen Form vorgefertigt. Angedeutet wird ferner, dass das Band 5 einstückig hergestellt sein kann. Das Band 5 sowie auch die übrigen Teile des Körpers 3 sind hier als Kunststoffspritzgussteile ausgeführt.

In der in den Figuren 3a bis 3c gezeigten Ausführungsform der Leitungsführungseinrichtung 1 weist das Band 5 eine regelmäßige Segmentierung in einer Vielzahl von in umfänglicher Richtung u aneinander angrenzenden, kreissektorförmigen Elementen 14 auf. Diese Elemente 14 sind in ihren angrenzenden Bereichen mittels hier als Foliengelenke 15 ausgebildeter, radialer Gelenke verschwenkbar miteinander verbunden. Da es sich hier um eine Prinzipskizze handelt, ist die umfängliche Erstreckung der einzelnen Elemente 14 nur beispielhaft zu nehmen. Deutlich wird jedoch aus der Skizze, dass deren Erstreckung in umfänglicher Richtung u nur wenige Mittelpunktswinkelgrade, hier ca. 15°, beträgt. Dadurch wird sicher gestellt, dass eine hohe Biegsamkeit des Körpers 3 bzw. des Bandes 5 bezüglich radialer Richtungen r möglich ist und dass hierdurch der Umlenkbogen 9 mit einem relativ engen Radius ausgebildet werden kann.

In den Figuren 4a bis 4d werden verschiedene Ansichten, insbesondere eine Schnittansicht gemäß dem Schnittverlauf A-A in Figur 4c des Körpers 3 gezeigt, wobei das Band 5 entsprechend den Figuren 3a bis c in Elemente 14 segmentiert ist. Seine erste Seite 12 ist als im Wesentlichen durchgehende Gleitfläche ausgebildet, wobei die erste Seite 12 des zweiten Trums 8 in der perspektivischen Darstellung des Körpers 3 gemäß Figur 4a nach oben weist. An der zweiten Seite 13 wird der Führungsraum 4 durch Mittel 16 begrenzt. Diese Mittel 16 weisen hier einen bügelartigen Aufbau mit einem U-förmigen Bügel 17 auf, dessen Schenkel 18 mit ihrem freien Enden an der zweiten Seite 13 des Bandes 5 festgelegt sind. In dem hier gezeigten Beispiel ist der Bügel 17 an seinem radial innen liegenden Schenkel 18 einstückig mit dem Band 5 verbunden. Der radial außen liegende Schenkel 18 weist einen Spalt 19 auf. Der Bügel 17 ist, was hier nicht weiter dargestellt, elastisch so aufweitbar, dass der Spalt 19 weit genug geöffnet werden kann, um die hier bereits in Führungsform 4 angeordneten Energieleitungen E in den Führungsraum 4 in radialer Richtung r einschieben zu können. Der radial innen liegende Schenkel 18 ist hier als Vollkörper dargestellt, um zu veranschaulichen, dass dieser Schenkel 18 hier gleichzeitig als Verstärkung des Bügels 17 dient, damit der Bügel 17 zur Öffnung des Spaltes 19 schadlos aufgebogen werden kann.

Deutlich ist der Figur 4c, einer Draufsicht auf den Körper 3, entnehmbar, dass an der bezüglich der Mittelachse m radial gegenüberliegenden Seite zum Umlenkbogen 9 die Lage 6 oberhalb und unterhalb des Umlenkbogens 9 in Folge der Aufweitung der Lagen 6 durch den Umlenkbogen 9 unter Ausbildung einer Ausbauchung radial nach außen gedrängt werden. Dies ist ebenfalls deutlich der Figur 4 mit der Schnittansicht gemäß dem Schnittverlauf A-A in Figur 4 sowie der Figur 4b einer Seitenansicht, deutlich entnehmbar.

Wie ferner in Figur 4 gezeigt, ist jedem Element 14 ein Bügel 17 zugeordnet. Diese Bügel 17 sind über einen Spalt 20 in den beiden Trumen 7, 8 umfänglich voneinander beabstandet. Vorgesehen, aber nicht in der Zeichnung explizit gezeigt, sind sich in umfänglicher Richtung u erstreckender Anschläge, über die benachbarte Bügel 17 in den Trumen 7, 8 anschlagen können.

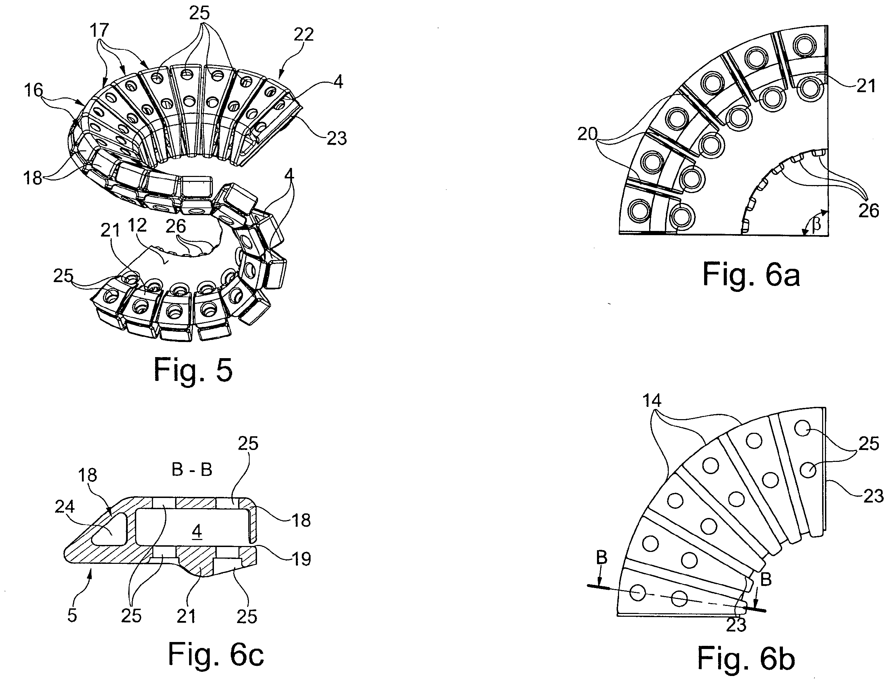

Die vorliegenden Gelenke 15 sind in dem Ausführungsbeispiel des Körpers 3 gemäß Figur A unter Materialverjüngung von der zweiten Seite 13 her soweit zur ersten Seite 12 hin angeordnet, dass die erste Seite 12 eine radial und umfänglich unterbrochene Gleitfläche ausbildet. In der Ausbildungsform des Körpers 3 gemäß den Figuren 5 und 6 ist an der ersten Seite 12 eine Verdickung 21 vorgesehen, die gleich einer Gleitkufe wirkt und hierüber eine wesentlich verringerte Gleitreibung bei der Kreisbewegung der beiden Anschlusspunkte 2 relativ zueinander verursacht.

In den Figuren 5 und 6 werden unterschiedliche Ansichten von Modulen 22 gezeigt, aus denen der Körper 3 aufgebaut sein kann. Die in den Figuren 5 und 6 dargestellten beiden Ausführungsformen des Moduls 22 unterscheiden sich lediglich dadurch, dass das Modul gemäß Figur 5 einen hier nicht eingezeichneten Mittelpunktswinkel bezüglich der Mittelachse m Beispiel gebend von ca. 360° und das Modul 22 gemäß Figur 6 Beispiel gebend einen Mittelpunktwinkel β von 90° aufweisen. Wie es skizzenhaft in der Figur 5 beispielhaft anhand eines in Umfangsrichtung u vorstehenden Vorsprunges 23 gezeigt, ist vorgesehen, dass die Module, wie die einzelnen Elemente, zu dem Körper 3 zusammensetzbar sind, wobei sie in ihren angrenzenden Bereichen verschwenkbar um radiale Achsen verbunden sind.

Die Module 22 sind jeweils aus einer bestimmten Anzahl von Elementen 14 aufgebaut. Die benachbarte Elemente 14 sind, wie bereits oben beschrieben, mittels im Band 5 radial angeordneter Foliengelenke 15 verschwenkbar miteinander verbunden. Der Bügel 17 der Elemente 14 ist in den Figuren 5 und 6 detaillierter dargestellt. Hierbei ist insbesondere der Figur 6c einer Schnittdarstellung gemäß dem Schnittverlauf B-B in Figur 6b, entnehmbar, ist der radial innen liegende Schenkel 18 zur Materialersparnis mit einer Innenkammer 24 versehen.

Ferner sind paarweise in jedes der Elemente 14 durchgehende Befestigungsöffnungen 25 in axialer Richtung a eingebracht.

Diese Maßnahme ermöglicht, dass jedes dieser Elemente 14 als Anschlusspunkt dienen kann, wenn der Körper 3, in Anpassung an vorgegebenen Einbaubedingungen, beliebig endseitig gekürzt werden kann, so dass das jeweils neue endseitige Element 14 dann als Anschlusspunkt dienen kann. Wie in der Ausführungsform des Körpers 3 gemäß Figur 4, so ist auch hier an dem radial außen liegenden Schenkel 18 des Bügels 17 jeweils ein Spalt 19 zum Einlegen der Energieleitungen E vorgesehen.

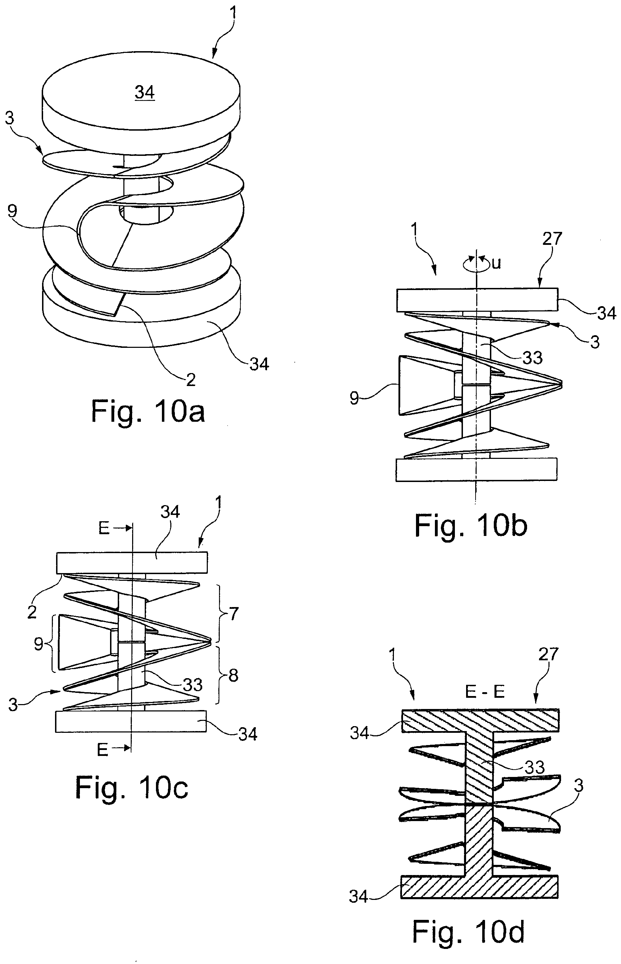

Radial nach innen weisend sind, wie in den Figuren 5, 6a und 6b ersichtlich, noppenartige Überstände 26 vorgesehen, mit denen der Körper 3 innenseitig an einer in Figur 10 dargestellten Führungsvorrichtung 27 gleitverschieblich anliegen kann. Dieses wird weiter unten näher erläutert. In Folge der Anordnung der Kammer 24 ist dieser Überstand 26 radial elastisch ausgelegt, welches eine Laufruhe des über die Kreisbewegung der Anschlusspunkte 2 bewegten Körpers 3 positiv beeinflusst.

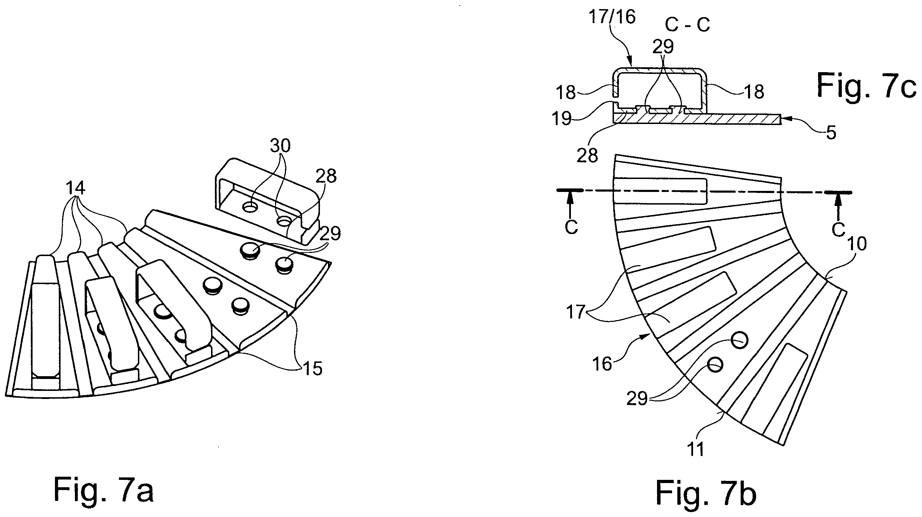

In Figur 7 werden verschiedene Ansichten einer weiteren Ausführungsform des Moduls 22 gezeigt. Hierbei zeigt Figur 7c eine Schnittansicht gemäß dem Schnittverlauf C-C in Figur 7b. Die Module 22 weisen hier eine andere Ausführungsform der als Bügel 17 ausgebildeten Mitte 16 auf. Der Bügel 17 weist zusätzlich eine Basisplatte 28 auf, mit der der Bügel 17 über eine Schnappverbindung mit Noppen 29 an der zweiten Seite 13 des Bandes 5 und in der Basisplatte 28 vorgesehen Noppenöffnung 30 festgelegt ist. Somit kann der Bügel 17 nach dem Druckknopfprinzip auf die zweite Seite 13 des Bandes 5 aufgeclipst werden.

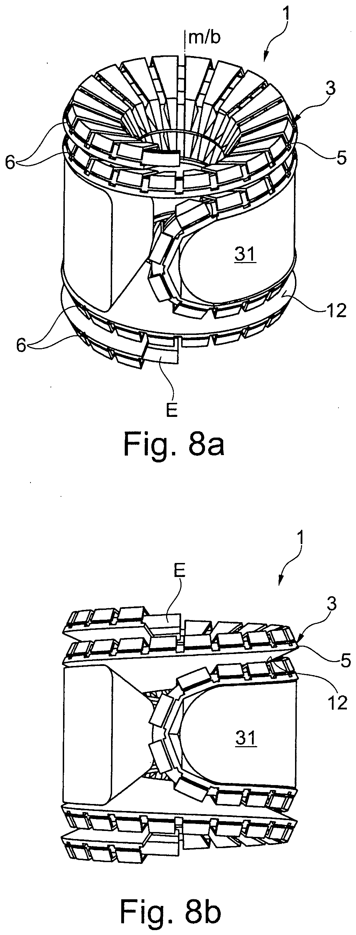

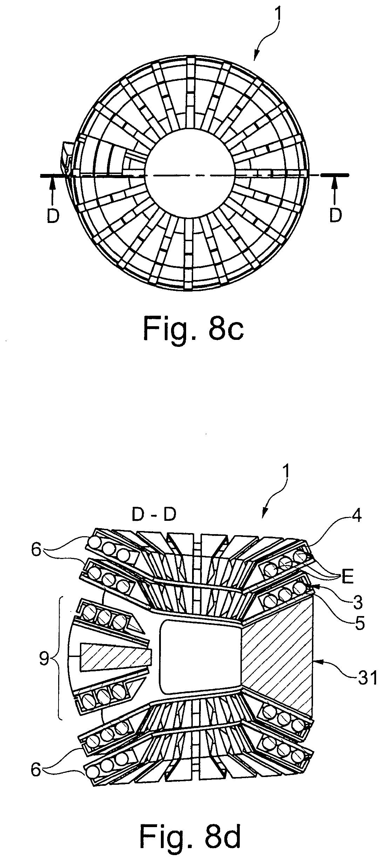

In den Figuren 8a bis 8d werden jeweils verschiedene Ansichten, insbesondere in Figur 8d eine Schnittansicht gemäß dem Schnittverlauf C-C in Figur 8c, der Leitungsführungseinrichtung 1 gezeigt, wobei hier Teile derselben der klareren Darstellung halber fortgelassen sind. Abweichend zu der Darstellung gemäß Figur 4a bis d, ist hier ein zusätzlicher Gleitkörper 31 als Teil der Führungsvorrichtung 27 vorgesehen. Dieser Gleitkörper 31 ist so zu dem kreisbogenförmigen Körper 3 angeordnet, dass der Umlenkbogen 9 sowie an den Umlenkbogen 9 anschließende Abschnitte der beiden Trume 7, 8 mit ihren Abschnitten der ersten Seite 12 an dem Gleitkörper 31 anliegen. Diese erste Seite 12 ist, wie zuvor beschrieben, als Gleitfläche ausgebildet. Der Gleitkörper 31 weist an seinen axialen Seiten Laufflächenabschnitte einer durchgehenden Lauffläche 32 zur gleitverschieblichen Anlage an die erste Seite 12 des Bandes 5 auf, wobei diese Laufflächenabschnitte durch den innenseitig an dem Umlenkbogen 9 anliegenden Laufflächenabschnitt der Lauffläche 32 verbunden sind.

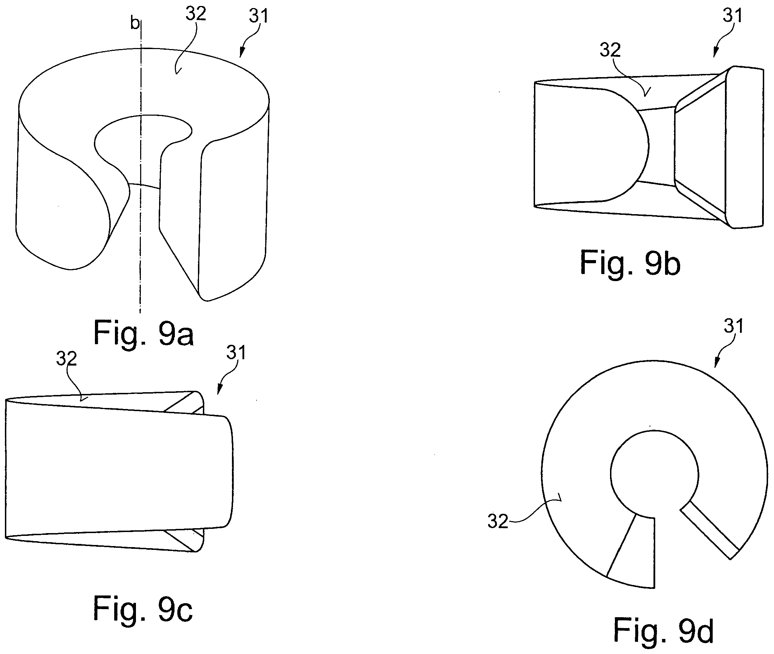

Der Gleitkörper 31 an sich ist in diesen Darstellungen jeweils in den Figuren 9a bis d gezeigt. Deutlich erkennbar ist seine kreissektorartige Form um eine Achse b, die in Einbaulage gleich der Mittelachse m ist. Hierbei weist er einen bezüglicher der Umfangsrichtung u viereckigen Querschnitt mit abgerundeten Kanten auf. Ferner ist ersichtlich, dass der Gleitkörper 31 in dem Bereich, in dem er an dem Umlenkbogen 9 innenseitig anliegt, bezüglich der Mittelachse m eine geringere Höhe als an seinem gegenüberliegenden Ende aufweist. Der Effekt des Gleitkörpers 31 ist neben der besonderen Gleiteigenschaften mit verminderter Gleitreibung darin zu sehen, dass der Gleitkörper 31 in dem Bereich des Umlenkbogens 9 die Lage der beiden Trume 7, 8 soweit axial beabstandet, dass diese in einer geordneten Wendelform gewunden angeordnet sein können. Ferner kann durch das Vorsehen des Gleitkörpers 31 die anhand der Figuren 4a bis 4c bereits erläuterten, bezüglich des Umlenkbogens 9 radial gegenüber liegenden Ausbauchung der Lagen 6 vermieden werden. Dies ist in Figur 8c, einer Draufsicht auf die Leitungsführungseinrichtung 1, deutlich gezeigt.

Beispielgebend in den Figuren 10a bis d wird ein weiteres Element der Führungsvorrichtung 27 gezeigt, das ein die Mittelachse m konzentrisch einschließendes zylindrisches Führungselement 33 aufweist. Um dieses Führungselement 33 ist der Körper 3, der hier, wie in den ersten Figuren, lediglich in Form des Bandes 5 dargestellt ist, in Einbaulage gewunden angeordnet. Ferner sind endseitig des zylindrischen Führungselementes 33 zwei Kreisscheiben 34 vorgesehen, an denen der Körper 33 mit seinen Anschlusspunkten 22 angeschlossen ist. Damit dienen die Kreisscheiben 34 als Mitnehmer für die Anschlusspunkte 2. Wie bereits oben angemerkt, ist der wendelförmige Körper 3 an seinen Anschlusspunkten 2 über die Beabstandung der Kreisscheiben 34 mittels des Führungselementes 33 vorgespannt, so das hierdurch die Form des gewundenen Körpers 3 stabilisiert ist.

Wie schematisch in der Figur 10 dargestellt, sind die beiden Kreisscheiben 34 funktionsnotwendig bezüglich der Mittelachse m verdrehbar gegeneinander gelagert. Hierzu sind sie in die jeweils mit einem Teil des zylinderförmigen Führungselementes 33 verbunden. Damit erfolgt die Kreisbewegung um die Mittelachse m über die drehbare Lagerung auf halber Höhe des zylindrischen Führungselementes 33.

### Bezugzeichenliste

- 1: Leitungsführungseinrichtung
- 2: Anschlusspunkt
- 3: Körper
- 4: Führungsraum
- 5: Band
- 6: Lage
- 7: erstes Trum
- 8: zweites Trum
- 9: Umlenkbogen
- 10: innere Schmalseite
- 11: äußere Schmalseite
- 12: erste Seite
- 13: zweite Seite
- 14: Element
- 15: Foliengelenk
- 16: Mittel
- 17: Bügel
- 18: Schenkel
- 19: Spalt
- 20: Spalt
- 21: Verdickung
- 22: Modul
- 23: Vorsprung
- 24: Innenkammer
- 25: Befestigungsöffnung
- 26: Überstand
- 27: Führungsvorrichtung
- 28: Basisplatte
- 29: Noppe
- 30: Noppenöffnung
- 31: Gleitkörper
- 32: Lauffläche
- 33: Führungselement
- 34: Kreisscheibe
- a: axiale Richtung
- b: Achse
- r: radiale Richtung
- u: umfängliche Richtung
- d: Drehrichtung
- m: MittelachseE Energieleitung

## Patentansprüche

1. Leitungsführungseinrichtung zur Aufnahme und Führung von Energieleitungen (E) oder Versorgungsleitungen zwischen zwei relativ zueinander beweglichen Anschlusspunkten (2) in einer Kreisbewegung, wobei die Leitungsführungseinrichtung (1) einen flexiblen kreisbogenförmigen Körper (3) und einen Führungsraum (4) für die Energieleitungen (E) aufweist, wobei der Körper (3) als Grundform ein flaches kreisringförmiges Band (5) mit einer oder mehreren in einer Bereitstellungslage um eine Mittelachse (m) schraubenartig gewundenen Lagen (6) aufweist, das Band (5) umfängliche Schmalseiten (10, 11) und diese verbindende gegenüberliegende größere Seiten, eine erste Seite (12) und eine zweite Seite (13), aufweist, die erste Seite (12) zumindest über einen radialen Teilbereich als zumindest im Wesentlichen durchgehende Gleitfläche ausgebildet ist und an der zweiten Seite (13) der Führungsraum (4) angeordnet ist sowie der kreisbogenförmige Körper (3) in einer Einsatzlage ein in einer Drehrichtung (d) gewundenes erstes Trum (7), ein gegensinnig zu dem ersten Trum (7) gewundenes zweites Trum (8) und einen die beiden Trume (7, 8) verbindenden Umlenkbogen (9) aufweist, **dadurch gekennzeichnet, dass** das Band (5) in der Bereitstellungslage zu einer durchgehenden Wendel gebogen ist, in der die Lagen (6) über ihre größeren Seiten (12, 13) aneinander anliegen, und der kreisbogenförmige Körper (3) in der Einsatzlage über die Anschlusspunkte (2) längs der Mittelachse (m) gleich einer Zugfeder vorgespannt ist.

2. Leitungsführungseinrichtung nach Anspruch 1,
**dadurch gekennzeichnet, dass** die Bereiche der Gleitfläche an den an dem Umlenkbogen (9) anschließenden Abschnitten der beiden Trume (7, 8) zueinander gewandt angeordnet sind.

3. Leitungsführungseinrichtung nach Anspruch 1 oder 2,
**dadurch gekennzeichnet, dass** an der zweiten Seite (13) Mittel (16) zur Aufnahme und Führung der Energieleitungen (E) oder Versorgungsleitungen angeordnet sind.

4. Leitungsführungseinrichtung nach einem der Ansprüche 1 bis 3, **dadurch gekennzeichnet, dass** sich das Band (5) aus einer Vielzahl von in umfänglicher Richtung (u) aneinander angrenzenden, kreissektorförmigen Elementen (14) zusammensetzt, die in ihren angrenzenden Bereichen flexibel und/oder verschwenkbar miteinander verbunden sind.

5. Leitungsführungseinrichtung nach Ansprüche 3 und 4,
**dadurch gekennzeichnet, dass** zumindest ein Teil der Elemente (14) auf ihrer die zweite Seite (13) des Bandes bildenden Seite die Mittel (16) zur Aufnahme und Führung der Energieleitungen (E) aufweist.

6. Leitungsführungseinrichtung nach einem der Ansprüche 1 bis 5, **dadurch gekennzeichnet, dass** das Band (5) einstückig ausgebildet ist.

7. Leitungsführungseinrichtung nach einem der Ansprüche 1 bis 6, **dadurch gekennzeichnet, dass** das Band (5) und/oder der kreisbogenförmige Körper (3) aus mehreren in umfänglicher Richtung (u) aneinander angrenzenden, kreissektorförmigen Modulen (22) aufgebaut ist, die in ihren angrenzenden Bereichen flexibel und/oder verschwenkbar miteinander verbunden sind.

8. Leitungsführungseinrichtung nach Anspruch 4 und 7,
**dadurch gekennzeichnet, dass** die Module (22) jeweils mehrere Elemente (14) umfassen.

9. Leitungsführungseinrichtung nach Anspruch 8,
**dadurch gekennzeichnet, dass** die Module (22) einstückig ausgebildet sind.

10. Leitungsführungseinrichtung nach einem der Ansprüche 1 bis 9, **dadurch gekennzeichnet, dass** zur Stabilisierung des Umlenkbogens (9) ein dem Umlenkbogen (9) angepasster Gleitkörper (31) vorgesehen ist, der in Einbaulage in der Leitungsführungseinrichtung (1) innenseitig des Umlenkbodens (9) zumindest partiell an der Gleitfläche des Umlenkbogens (9) gleitverschieblich anliegt.

11. Leitungsführungseinrichtung nach Anspruch 10,
**dadurch gekennzeichnet, dass** der Gleitkörper (31) bezüglich der Mittelachse (m) über einen Mittelpunktswinkel (β) größer 180° und kleiner 360° zumindest partiell an den Gleitflächen der an dem Umlenkbogen (9) anschließenden Abschnitten der beiden Trume (7, 8) gleitverschieblich anliegt.

12. Leitungsführungseinrichtung nach einem der Ansprüche 1 bis 11, **dadurch gekennzeichnet, dass** sie für den kreisbogenförmigen Körper (3) eine Führungsvorrichtung (27) mit einem die Mittelachse (m) aufweisenden zylindrischen Führungselement (33), um das der Körper (3) in Einbaulage gewunden angeordnet ist, und mit mindestens einem Mitnehmer für einen der Anschlusspunkte (2) aufweist, mittels dessen dieser Anschlusspunkt (2) relativ zu dem anderen Anschlusspunkt (2) in der Kreisbewegung bewegbar ist.

13. Leitungsführungseinrichtung nach Anspruch 12,
**dadurch gekennzeichnet, dass** der kreisbogenförmige Körper (3) in Einbaulage zumindest partiell innenseitig an dem Zylindermantel des Führungselementes (33) verschieblich anliegt.

14. Gleitkörper zur Stabilisierung eines Umlenkbogens (9) einer Leitungsführungseinrichtung (1) gemäß einer der Ansprüche 1 bis 13, wobei der Gleitkörper (31) eine an den Umlenkbogen (9) angepasste Form mit einer durchgehenden Lauffläche (32) aufweist, mittels derer der Gleitkörper (31) in Einbaulage in der Leitungsführungseinrichtung (1) innenseitig des Umlenkbodens (9) zumindest partiell an der Gleitfläche des Umlenkbogens (9) gleitverschieblich anliegt,
**dadurch gekennzeichnet, dass** die Form kreisringsektorartig um eine Achse (b) gekrümmt ausgebildet ist sowie die Lauffläche (32) aus zwei axial voneinander abgewandten und in Richtung der Achse (b) weisenden Laufflächenabschnitten für an den Umlenkbogen (9) anschließende Abschnitte der Trume (7,8) und einem an einer in Umfangsrichtung (u) weisenden Stirnseite angeordneten, dem Umlenkbogen (9) angepassten und die in Richtung der Achse (b) weisenden Laufflächenabschnitte verbindenden Laufflächenabschnitt aufgebaut ist.

15. Gleitkörper nach Anspruch 14, **dadurch**
**gekennzeichnet, dass** die kreisringsektorartige Form einen Mittelpunktswinkel (β) größer 180° und kleiner 360° aufweist.

## Claims

1. A line guiding device for receiving and guiding energy lines (E) or supply lines in a circular movement between two connecting points (2) which are moveable relative to each other, wherein the line guiding device (1) has a flexible body (3) in the shape of a circular arc and a guide space (4) for the energy lines (E), wherein the basic shape of the body (3) is a flat ribbon (5) in the shape of a circular ring and having one or more layers (6) which are helically wound around a centre line (m) in a readiness position, the ribbon (5) has peripheral narrow sides (10, 11) and oppositely disposed larger sides connecting same, a first side (12) and a second side (13), the first side (12) at least over a radial portion is in the form of an at least substantially continuous sliding surface and is arranged at the second side (13) of the guide space (4) and the body (3) in the shape of a circular arc in a position of use has a first run (7) wound in a direction of rotation (d), a second run (8) wound in opposite relationship to the first run (7), and a direction-changing arc (9) connecting the two runs (7, 8), **characterised in that** the ribbon (5) in the readiness position is curved to form a continuous coil in which the layers (6) bear against each other by way of their larger sides (12, 13) and the body (3) in the shape of a circular arc in the position of use is biased by way of the connecting points (2) along the centre line (m) like a tension spring.

2. A line guiding device according to claim 1 **characterised in that** the regions of the sliding surface at the portions of the two runs (7, 8), that adjoin the direction-changing arc (9), are arranged in mutually facing relationship.

3. A line guiding device according to claim 1 or claim 2 **characterised in that** means (16) for receiving and guiding the energy lines (E) or supply lines are arranged at the second side (13).

4. A line guiding device according to one of claims 1 to 3 **characterised in that** the ribbon (5) is composed of a multiplicity of elements (14) which are in the shape of sectors of a circle and which mutually adjoin in the peripheral direction (u) and which in their adjoining regions are flexibly and/or pivotably connected together.

5. A line guiding device according to claim 3 and claim 4 **characterised in that** at least a part of the elements (14) on their side forming the second side (13) of the ribbon has the means (16) for receiving and guiding the energy lines (E).

6. A line guiding device according to one of claims 1 to 5 **characterised in that** the ribbon (5) is in one piece.

7. A line guiding device according to one of claims 1 to 6 **characterised in that** the ribbon (5) and/or the body (3) in the shape of a circular arc is made up of a plurality of modules (22) which are in the shape of sectors of a circle and which mutually adjoin in the peripheral direction (u) and which in their adjoining regions are flexibly and/or pivotably connected together.

8. A line guiding device according to claim 4 and claim 7 **characterised in that** the modules (22) each include a plurality of elements (14).

9. A line guiding device according to claim 8 **characterised in that** the modules (22) are in one piece.

10. A line guiding device according to one of claims 1 to 9 **characterised in that** for stabilisation of the direction-changing arc (9) there is provided a sliding body (31) which is adapted to the direction-changing arc (9) and which in the installation position in the line guiding device (1) at the inside of the direction-changing arc (9) bears slidingly displaceably at least partially against the sliding surface of the direction-changing arc (9).

11. A line guiding device according to claim 10 **characterised in that** the sliding body (31) bears slidingly displaceably with respect to the centre line (m) over a centre point angle (β) of greater than 180° and less than 360° at least partially against the sliding surfaces of the portions of the two runs (7, 8), which portions adjoin the direction-changing arc (9).

12. A line guiding device according to one of claims 1 to 11 **characterised in that** for the body (3) in the shape of a circular arc it has a guide device (27) having a cylindrical guide element (33) which has the centre line (m) and around which the body (3) is arranged wound in the installation position, and having at least one entrainment means for one of the connecting points (2) by means of which said connecting point (2) is moveable in the circular movement relative to the other connecting point (2).

13. A line guiding device according to claim 12 **characterised in that** the body (3) in the shape of a circular arc bears displaceably in the installation position at least partially at the inside against the cylindrical surface of the guide element (33).

14. A sliding body for stabilising a direction-changing arc (9) of a line guiding device (1) according to one of claims 1 to 13 wherein the sliding body (31) is of a shape adapted to the direction-changing arc (9) and having a continuous running surface (32), by means of which the sliding body (31) in the installation position in the line guiding device (1) at the inside of the direction-changing arc (9) bears slidingly displaceably at least partially against the sliding surface of the direction-changing arc (9), **characterised in that** the shape is curved in the manner of a sector of a circular ring about an axis (b) and the running surface (32) is made up of two running surface portions which face axially away from each other and which face in the direction of the axis (b) for the portions of the runs (7, 8), that adjoin the direction-changing arc (9), and a running surface portion which is arranged at an end facing in the peripheral direction (u) and which is adapted to the direction-changing arc (9) and which connects the running surface portions that face in the direction of the axis (b).

15. A sliding body according to claim 14 **characterised in that** the shape in the manner of a sector of a circular ring has a centre point angle (β) of greater than 180° and less than 360°.

## Revendications

1. Dispositif de guidage de ligne pour recevoir et guider des lignes d'énergie (E) ou des lignes d'alimentation entre deux points de raccordement (3) mobiles les uns par rapport aux autres suivant un mouvement circulaire, ledit dispositif de guidage de ligne (1) comportant un corps en forme d'arc de cercle (3) et un espace de guidage (4) pour les lignes d'énergie (E), le corps (3) présentant comme une forme de base une bande plate en forme d'anneau circulaire (5) avec une ou plusieurs couches (6) enroulées de manière hélicoïdalement autour d'un axe central (m) dans une position de mise à disposition, la bande (5) présentant des côtés étroits circonférentiels (10, 11) et des côtés plus grandes opposés les reliant, un premier côté (12) et un deuxième côté (13), le premier côté (12) étant réalisé sous la forme d'une surface glissante au moins essentiellement et au moins sur une région partielle radiale, et ledit espace de guidage (4) étant disposé sur le deuxième côté (13) et le corps en forme d'arc de cercle (3) comportant un premier brin (7) enroulé dans une direction de rotation (d) dans une position d'utilisation, un deuxième brin (8) enroulé dans une direction opposée au premier brin (7), et un arc de renvoi (9) reliant les deux brins (7, 8), **caractérisé en ce que** la bande (5) dans la position de mise à disposition est courbée en forme d'une hélice continue dans laquelle les couches (6) sont adjacentes les unes aux autres par ses côtés plus grandes (12, 13), et le corps en forme d'arc de cercle (3) étant précontraint le long d'un axe central (m) sous la forme d'un ressort de traction par les points de raccordement (2), dans la position d'utilisation.

2. Dispositif de guidage de ligne selon la revendication 1, **caractérisé en ce que** les zones de la surface glissante sont disposées face à face sur les parties des deux brins (7, 8) se raccordant à l'arc de renvoi (9).

3. Dispositif de guidage ligne selon la revendication 1 ou 2, **caractérisé en ce que** sur le deuxième côté (13) sont disposés des moyens (16) pour recevoir et guider des lignes d'énergie (E) ou des lignes d'alimentation.

4. Dispositif de guidage de ligne selon l'une des revendications 1 à 3, **caractérisé en ce que** la bande (5) se compose d'une pluralité d'éléments (14) en forme de secteur d'anneau circulaire et adjacents les uns aux autres dans la direction circonférentielle (u), lesdits éléments étant reliés les uns aux autres de manière flexible et/ou pivotante dans ses zones adjacentes.

5. Dispositif de guidage de ligne selon l'une des revendications 3 et 4, **caractérisé en ce qu'**au moins une partie des éléments (14) présente sur son côté formant le deuxième côté (13) de la bande lesdits moyens pour recevoir et guider les lignes d'énergie (E).

6. Dispositif de guidage de ligne selon l'une des revendications 1 à 5, **caractérisé en ce que** la bande (5) est réalisée d'une seule pièce.

7. Dispositif de guidage de ligne selon l'une des revendications 1 à 6, **caractérisé en ce que** la bande (5) et/ou le corps en forme d'arc de cercle (3) se compose de plusieurs modules adjacents (22) en forme de secteur circulaire reliés entre eux de manière flexible et/ou pivotante dans ses zone adjacentes.

8. Dispositif de guidage de ligne selon la revendication 4 et 7, **caractérisé en ce que** les modules (22) respectivement comportent plusieurs d'éléments (14).

9. Dispositif de guidage de ligne selon la revendication 8, **caractérisé en ce que** les modules (22) sont réalisés en une pièce.

10. Dispositif de guidage de ligne selon l'une des revendications 1 à 9, **caractérisé en ce que** pour stabiliser l'arc de renvoi (9), il est prévu un corps glissant (31) adapté à l'arc de renvoi (9), corps glissant (31) qui dans la position montée dans le dispositif de guidage de ligne (1) s'applique de manière coulissante contre la surface glissante de l'arc de renvoi (9) à l'intérieur de l'arc de renvoi, au moins partiellement.

11. Dispositif de guidage de ligne selon la revendication 10, **caractérisé en ce que** le corps glissant (31) s'applique de manière coulissante au moins partiellement contre les surfaces glissantes des parties des deux brins (7, 8) adjacentes à l'arc de renvoi (9), sur un angle au centre (β) supérieure à 180° et inférieure à 360° par rapport à l'axe central (m).

12. Dispositif de guidage de ligne selon l'une des revendications 1 à 11, **caractérisé en ce que** celui-ci comporte, pour le corps en forme d'arc de cercle (3), un dispositif de guidage (27) avec un élément de guidage cylindrique (33) comportant l'axe central (m), autour lequel élément de guidage cylindrique est disposé de manière enroulée le corps (3) dans la position installée, et avec au moins un entraîneur pour l'un des points de raccordement (2) au moyen duquel cet point de raccordement (2) est mobile relativement à l'autre point de raccordement (2) suivant un mouvement circulaire.

13. Dispositif de guidage de ligne selon la revendication 12, **caractérisé en ce que** le corps en forme d'arc de cercle (3) s'applique au moins partiellement contre l'intérieur de l'enveloppe de cylindre de l'élément de guidage (33) de manière mobile, dans la position installée.

14. Corps glissant pour la stabilisation d'un arc de renvoi (9) d'un dispositif de guidage de ligne (1) selon l'une des revendications 1 à 13, ledit corps glissant (31) présentant une forme adaptée à l'arc de renvoi (9) avec une surface de roulement (32) continue au moyen de laquelle le corps glissant (31) s'applique de manière coulissante et au moins partiellement contre l'intérieur de la surface glissante de l'arc de renvoi (9), dans la position installée du dispositif de guidage de ligne (1), **caractérisé en ce que** la forme est réalisée de manière courbée autour d'un axe (b) sous forme de secteur d'anneau circulaire, et la surface de roulement (32) se compose de deux parties de surface de roulement détournées l'une de l'autre et orientées dans le sens de l'axe (b), pour des parties des brins (7, 8) adjacentes à l'arc de renvoi (9), et d'une partie de surface de roulement disposée sur une face frontale orientée dans le sens circonférentiel et adaptée à l'arc de renvoi (9) et reliant les parties de surface de roulement orientées dans le sens de l'axe (b).

15. Corps glissant selon la revendication 14, **caractérisé en ce que** la forme du type secteur d'anneau circulaire présente un angle au centre (β) supérieur à 180° et inférieur à 360°.
